# EUROPEAN PATENT SPECIFICATION

(11) **EP 2 269 841 B1**
(45) Date of publication and mention of the grant of the patent: **22.08.2012**
(21) Application number: 10167937.1
(22) Date of filing: 30.06.2010
(51) Int. Cl.: B60C 25/138

(54) **Bead detaching arm, tire demounting method and apparatus using bead detaching arm**
Wulstabdrückarm, Reifendemontageverfahren und -gerät, das einen Wulstabdrückarm benutzt
Bras détacheur de talon, procédé de démontage de pneu et appareil utilisant le bras détacheur de talon

(30) Priority: 30.06.2009 JP 2009154885; 30.07.2009 JP 2009177199; 30.07.2009 JP 2009177201; 22.08.2009 JP 2009192638
(43) Date of publication of application: 05.01.2011
(73) Proprietor: Onodani Machine Co., Ltd., Fukui-ken 915-0801 (JP)
(72) Inventor: Mimura, Yoshio, Fukui-ken 915-0813 (JP)
(74) Representative: Vossius & Partner

(56) References cited:
- EP-A1- 1 607 247
- EP-A1- 1 714 807
- EP-A1- 2 233 325
- EP-A2- 1 177 920
- BE-A1- 900 040

## Description

The present invention relates to a bead detaching arm configured to detach an upper bead portion of a tire mounted on a wheel fixedly placed on a tire mounting and demounting apparatus in a horizontal position specifically for run flat tires (tires which allow traveling of a certain distance even after blowouts thereof) and low-profile tires, a tire demounting apparatus provided with the bead detaching arm, and a method of detaching an upper bead portion of the tire using the bead detaching arm from a wheel.

When mounting or demounting a tire on or from a wheel, a tire mounting and demounting apparatus is generally used to enhance the efficiency of tire mounting and demounting operations. Methods of mounting and demounting the tire differ depending on the tire size. In the case of large tires such as tires for trucks, mounting and demounting of the tire are achieved only by turning the tire while pressing a bead roller against a side surface of the tire with the wheel placed on a turntable of the tire mounting and demounting apparatus and the like in a horizontal position.

However, in the case of tires mounted on compact cars, mounting and demounting of the tire cannot be achieved only by turning the tire while pressing the same with the bead roller as in the case of the large tire. It is because the tires for the compact car are softer than the large tires. When the tire side surface is pressed against the bead roller, the result is just the deformation of the entire tire. Detachment of the bead portion of the tire from a rim portion of the wheel, or in contrast, fitting of the same to the rim portion of the wheel cannot be achieved only by pressing with the bead roller. Therefore, mounting and demounting to and from the wheel are achieved by turning the tire with the bead portion of the tire caught by a tire claw of the tire mounting and demounting apparatus.

In other words, the tire claw is provided at a lower end of a rod pending from an arm end that turns horizontally, and the wheel is fixed to the turntable in the same manner. Then, in the state in which the tire bead portion is caught by the tire claw, mounting and demounting of the tire is preformed while turning the wheel and the tire. The tire mounting and demounting apparatus having the turntable and the arm provided with the tire claw is known in the prior art and is used in many fields as a matter of course. However, in the case of low-profile tires, the tire mounting and demounting operations cannot be performed easily using the tire mounting and demounting apparatus in the prior art even though they are tires for the same compact cars. Likewise, the mounting and demounting operations are not easy in the case of the run flat tires as well.

In recent years, the low-profile tires are mounted in many cases. As the tires of this type have high rigidity in comparison with general tires for compact cars, they cannot be mounted to the wheel and cannot be demounted therefrom only by turning the tire with the tire bead portion caught by the tire claw. Therefore, there is a known apparatus that is provided with a mount roller or demount roller in addition to the tire claw. For example, "Method of Demounting Low-profile Tire" in Japanese Patent No, 2724661 and "Method of Demounting Low-profile Tire and Apparatus Therefor" in Japanese Patent No.2668318 disclose a tire mounting and demounting apparatus which also serves as the mount roller and the demount roller and a method of mounting and demounting tire thereby.

The "Method of Mounting Low-profile Tire" in Japanese Patent No. 2724661 is configured as follows. An operator fixes a wheel to a turntable, places a low-profile tire on the wheel, fit a lower bead portion of the tire placed thereon to the wheel while turning the turntable with the lower bead portion caught by a tire claw arranged at a predetermined position, positions the lower bead portion at a drop portion of the wheel, causes an upper bead portion of the tire to be caught by the tire claw in the same manner, and turn the turntable while pressing an upper side surface of the tire with a mount roller arranged near the tire claw rearward of the tire in the direction of rotation, thereby fitting the upper bead portion to the wheel.

The "Method of Demounting Low-profile Tire" in Japanese Patent No.2668318 is configured as follows. An operator fixes a wheel to a turntable via a chuck claw, drops an upper bead portion of the tire into a drop portion of the wheel by pressing the upper side surface of the tire with a demount roller, inserts a lever into the upper bead portion on the opposite side opposed thereto and causes the same to be caught by a tire claw, and turn the turntable, thereby detaching the upper bead portion from the wheel. Subsequently, if a lower bead portion of the tire is not dropped into the drop portion, the operator places the demount roller on a lower side surface and pushes the same upward therewith and, in the state in which the lower bead portion is dropped into the drop portion, inserts the lever therein in the same manner as the upper bead portion and causes the same to be caught by the tire claw, and then turns the turntable, thereby detaching the lower bead portion from the wheel.

As regards the mounting of the low-profile tire, the "Method of Mounting Low-profile Tire" in Japanese Patent No. 2724661 may be employed without causing any big problem. However, in this method, the demounting of the low-profile tire is not easy. In other words, lifting with a hand lever is required for causing the tire bead portion to be caught by the tire claw, and specifically, the operation to cause the hard tire bead portion of the low-profile tire to be caught by the tire claw is not easy. The wheel or the tire bead portion is scratched and damaged in many cases. In addition, in the case of the run flat tire, it is less easy or even more difficult.

Document EP 1 177 920 A2 relates to an automatic device for mounting and removing a tyre onto and from the relative wheel rim with rotary means associated with a frame which supports an operating head, provided with at least one demounting tool which can rotate about an axis perpendicular to the main axis of said operating head to be positioned between a first position for seeking and gripping the bead of the tyre, in which the tool is orientated towards the centre of the wheel rim, and a second position for extracting said bead of the tyre from the wheel rim, in which the tool is perpendicular to the axis or is orientated in the opposite direction.

Document EP 2 233 325 A1 discloses a machine for fitting and removing the wheel tyres of vehicles comprises:
- a base frame supporting grip and rotation moving means for gripping and rotation moving at least a rim of wheels for vehicles with at least a retention flange for at least a bead of a tyre to be fitted/removed on/from the rim;
- an operating head 4) which is associable with the base frame, is positionable near the retention flange and comprises:
- a guiding nut of the bead;
- a guiding wing of the bead;
- a grip tool for gripping the bead which is arranged between the guiding nut and the guiding wing and comprises a shaped active extremity with a substantially oblique profile suitable for cooperating with the guiding nut for guiding the bead; and
- movement means for moving the grip tool between a first guiding configuration of the bead, in which the active extremity is arranged near the guiding nut and near the guiding wing, and a second grip configuration of the bead, the movement means being suitable for moving the grip tool from the first configuration to the second configuration along a first trajectory and from the second configuration to the first configuration along a second trajectory substantially different from the first trajectory.

Document EP1714807 A1 further discloses a bead detaching tool for use in a tyre changing machine from which a method of detaching an upper bead portion according to the features of claim 1 can be derived.

In this manner, the tire mounting and demounting operation using the tire mounting and demounting apparatus in the prior art has a problem as described above. It is an object of the invention to solve the problem as described above, and provide a bead detaching arm which allows detachment of an upper bead portion of a tire to be achieved without specific skill and without using a hand lever, a tire bead detaching apparatus provided with the bead detaching arm, and a method of detaching the tire bead specifically for the upper bead portions which are hard to be detached.

In a method of detaching an upper tire bead portion according to the invention, a tire mounting and demounting apparatus is used, and the tire mounting and demounting apparatus is provided with a novel bead detaching arm used therein. The bead detaching arm is curved into a substantially S-shape at a distal end thereof, and is formed with an outer groove and an inner groove at the distal end portion thereof on the opposite sides from each other; The bead detaching arm is rotatable so as to change its orientation about an axis. The bead detaching arm is capable of changing in position according to the tire size, and is movable upward and downward according to an action of an air cylinder.

A wheel having a tire mounted thereon is fixed to a rotatable turntable in a horizontal direction and, in this state, the bead detaching arm is moved downward to press the portion of the tire near an upper bead portion. The upper bead portion is pressed downward. However, since the upper bead portion cannot be brought into engagement with the bead detaching arm in this state, the bead detaching arm is rotated to bring the distal end toward the wheel to a position near the wheel. When the bead detaching arm is moved further downward, the upper bead portion engages the outer groove of the beam detaching arm.

When the bead detaching arm is moved upward at timing when the upper bead portion engages the outer groove of the bead detaching arm, part of the upper bead portion is lifted and detached from a wheel rim portion. Then, the inner groove of the bead detaching arm engages an end edge of the wheel and is positioned. In other words, by the engagement of the upper bead portion with the outer groove, the bead detaching arm is pressed inward, so that the inner groove engages the wheel end edge in conjunction with the upward movement.

The outer groove and the inner groove of the bead detaching arm are different in height, and the outer groove is formed at a position higher than the inner groove, and the inner groove is formed at a lower position. Therefore, in a state in which the inner groove engages the wheel end edge, the upper bead portion is positioned upward of the wheel end edge apart therefrom. If the wheel turns together with the turntable in this state, the upper bead portion is detached from the wheel rim portion. As a matter of course, the bead detaching arm is not moved and located at a stationary position.

When the upper bead portion is detached, a lower bead portion is detached subsequently. The lower bead portion is easily detached only by the rotation while lifting the same with a bead up roller. The method of detaching the lower bead portion is not included in the invention, and any other methods may be employed. The air cylinder is used as means for moving the bead detaching arm downward and then upward in order to engage the upper tire bead portion with the outer groove. The bead detaching arm is moved upward with the upper tire bead portion engaged with the outer groove thereof, and the air cylinder is controlled to release the air pressure therein in a state in which the wheel end edge engages the inner groove.

By using the method of detaching the upper tire bead portion according to the invention, the upper tire bead portion can be detached easily in a short time using the bead detaching arm. In other words, the bead detaching arm is moved downward along a guide post by an operation of the air cylinder, rotated and inclined to cause the upper tire bead portion to be engaged with the outer groove of the bead detaching arm. When the bead detaching arm is moved upward in this state, the wheel end edge engages the inner groove of the bead detaching arm, and the entire upper bead portion is detached from the wheel by turning the wheel.

In this case, the positioning of the bead detaching arm is achieved by causing the inner groove of the bead detaching arm to be engaged with the wheel end edge. When the wheel is turned and the most part of the upper bead portion is detached from the wheel, a force to press the upper tire bead portion downward is weakened, and a force to move the bead detaching arm upward by the air cylinder exceeds, so that the bead detaching arm is detached from the wheel end edge. However, in the invention, the bead detaching arm is prevented from coming apart from the wheel end edge by releasing the air pressure in the air cylinder, and hence the upper bead portion can be removed safely.

It is not necessary to cause the upper bead portion to be engaged with a tire claw using a hand lever in the prior art, and the upper bead portion is brought into engagement with the outer groove as the next logical step by the bead detaching arm moving downward and being changed in orientation thereof. Therefore, the operator does not have to have a skill, and is capable of detaching the upper tire bead portion only by the upward and downward movement of the bead detaching arm and rotation of the wheel without scratching the wheel and the upper bead portion.

The present invention thus relates to a bead detaching arm, a tire demounting method, and/or an apparatus using a or such bead detaching arm.

In particular, according to alternative or additional aspects, in order to provide a method of detaching an upper bead portion of a low-profile tire or a ran flat tire easily, a bead detaching arm having an outer groove formed at a distal end portion thereof for allowing engagement of the upper bead portion therewith, and an inner groove formed at a position lower than the outer groove and on the opposite side therefrom and configured to engage with a wheel end edge is provided so as to be movable upward and downward, the bead detaching arm is pressed against a portion of a tire near the upper bead portion and deforms the same to engage an upper tire bead portion with the outer groove, the bead detaching arm is moved upward to engage the inner groove with the end edge of the wheel and, in this state, the upper tire bead portion is detached by turning the wheel.
Fig. 1 is a plan view showing a tire mounting and demounting apparatus having a bead detaching arm according to the invention;
Fig. 2 is a front view showing the same tire mounting and demounting apparatus;
Figs. 3A and 3B are a plan view and a side view, respectively, showing a state of mounting a tire on a wheel using the same tire mounting and demounting apparatus;
Figs. 4A and 4B are a plan view and a side view, respectively, showing the bead detaching arm of the same tire mounting and demounting apparatus;
Figs. 5A and 5B are side views showing an air circuit of an air cylinder for moving the bead detaching arm upward and downward;
Figs. 6A and 6B are a side view and a partly enlarged side view, respectively, showing a state in which a tire bead portion is pressed by the bead detaching arm;
Figs. 7A and 7B are a side view and a partly enlarged side view, respectively, showing a state in which a distal end is brought into a position close to the wheel by rotating the bead detaching arm;
Figs. 8A and 8B are a side view and a partly enlarged side view, respectively, showing a state in which a tire bead engages an outer groove of the same bead detaching arm;
Figs. 9A and 9B are a side view and a partly enlarged side view, respectively, showing a state in which the tire bead is detached from a wheel rim portion by rising the same bead detaching arm and an inner groove of the bead detaching arm engages a wheel end edge portion of the wheel and positioned; and
Figs. 10A and 10B are a plan view and a front view, respectively, showing a turntable for fixing the tire wheel.

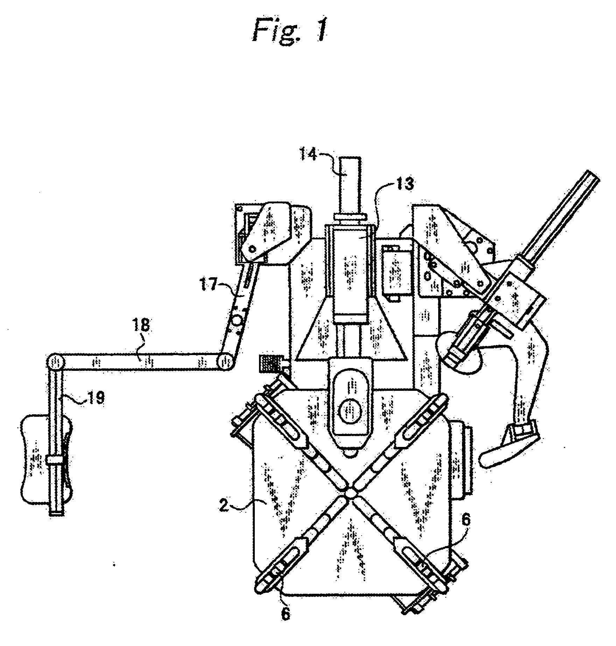

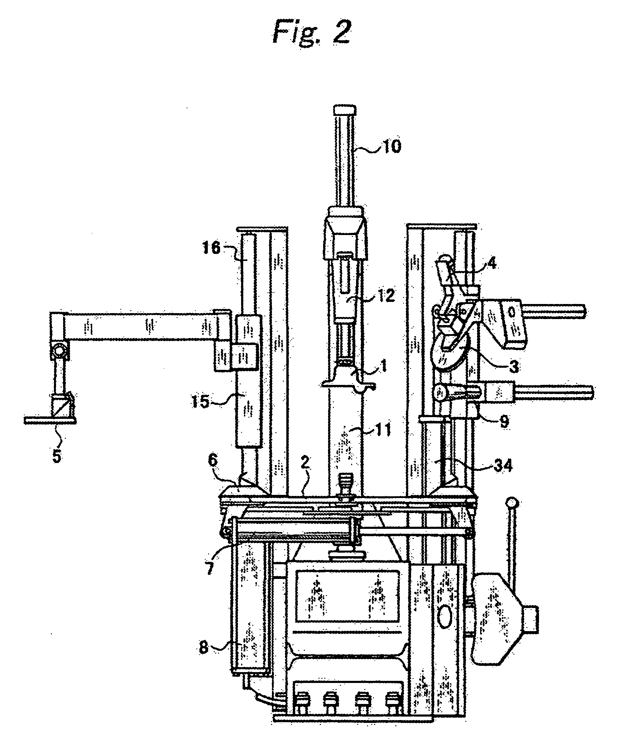

Fig. 1 and Fig. 2 show a tire mounting and demounting apparatus having a bead detaching arm according to the invention. In the drawings, reference numeral 1 designates a tire claw, reference numeral 2 designates a turntable, reference numeral 3 designates a bead press roller, reference numeral 4 designates a bead detaching arm, reference numeral 5 designates a holding panel, and reference numeral 9 designates a bead up roller. The turntable 2 includes holding claws 6, 6 ... attached thereto, and the holding claws 6, 6 ... are activated by an air cylinder 7 attached to a lower side of the turntable 2 to fix a wheel placed on the turntable 2. In other words, the holding claws 6, 6 ... slide along a groove extending in the radial direction of the turntable 2, and fix the wheel placed on the turntable 2.

The apparatus body includes additional air cylinders 8 and 34 separately at both sides thereof, and the holding panel 5, the bead press roller 3, the bead detaching arm 4, and the bead up roller 9 are moved upward and downward by activating the air cylinders 8 and 34. The tire claw 1 is fixed to a lower end of a vertical guide pole 10, and the vertical guide pole 10 is fitted to a vertical bearing 12 so as to be movable upward and downward.

A column 11 is provided upright at the center of the apparatus body in the vertical direction, and a horizontal bearing 13 is provided at an upper end of the column 11. A horizontal guide pole 14 is slidably fitted into the horizontal bearing 13. Therefore, the tire claw 1 is capable of changing its position to accommodate any sizes of the tire by expanding and compressing the vertical guide pole 10 and the horizontal guide pole 14. Therefore, the tire beads of any sizes are supported.

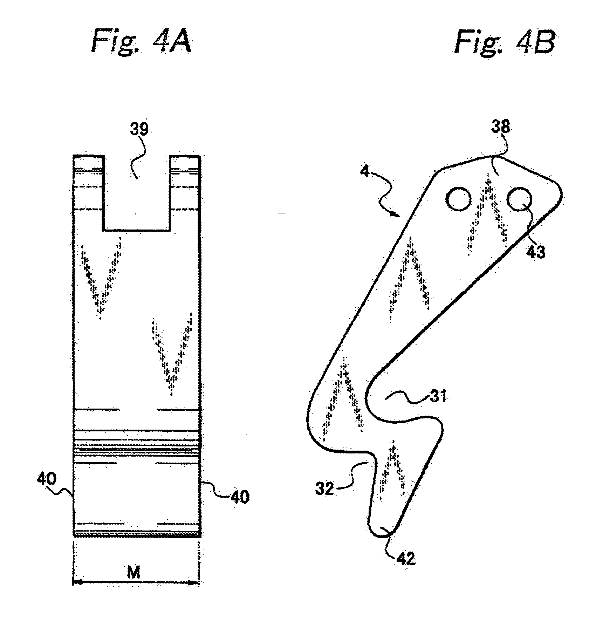

As shown in Figs. 4A and 4B, the bead detaching arm 4 has a distal end portion curved into a substantially gentle S-shape in side view so as not to scratch a tire 21 and a wheel 20, and a corner defined by a side surface 40 and a distal end 42 is also formed into a gently curved surface. An inner groove 32 and an outer groove 31 are formed ona front lower side and a back upper side of the S-shape respectively so as to oppose to each other. In other words, the bead detaching arm 4 is formed so that the outer groove 31 is located at a position higher than the inner groove 32 when in use. The thickness of the respective portions of the bead detaching arm 4 are not specifically limited. However, they are set to be strong enough to lift an upper bead portion 23 of the tire 21. A width M of the bead detaching arm 4 is set to be strong enough to resist a friction caused by the rotation of the wheel 20 and the tire 21 in a state in which the upper bead portion 23 engages the outer groove 31 and a wheel end edge 24 of the wheel 20 engages the inner groove 32.

A base portion 38 of the bead detaching arm 4 is formed with a notched portion 39 and through holes 43 and 43 for inserting bolts on both sides thereof. Part of a bed plate 41 rotatably attached to a distal end of a shaft 22 of rectangular shape in cross section is secured with a screw in a state of being fitted into the notched portion 39. The bed plate 41 is rotatably attached to the distal end of the angular shaft 22 via a pivotal axis 33. The bead press roller 3 is rotatably supported at the distal end of the angular shaft 22 in pair with the bead detaching arm 4. An air cylinder 25 which rotates the bead detaching arm 4 in one direction and a spring 26 which urges the bead detaching arm 4 in the direction of rotation opposite therefrom are further attached to the distal end of the angular shaft 22.

When the air cylinder 25 is activated and a piston rod is projected, the distal end of the bead detaching arm 4 moves away from the wheel 20. When the air cylinder 25 is turned OFF, the piston rod is retracted and the distal end of the bead detaching arm 4 is brought into a position close to the wheel 20 by a spring force of the spring 26.

The angular shaft 22 extends toward the center of the wheel 20, and is capable of sliding according to the outer diameter of the wheel 20. In other words, the angular shaft 22 slides so that the distal end of the bead detaching arm 4 presses the portion near the upper tire bead portion 23, and is locked at a predetermined position. The angular shaft 22 is pivotally supported by a bearing 28, and is provided with a lock panel 30 that is activated by an air cylinder 29 so as to be locked at a predetermined position. A base portion 27 having the bearing 28 attached thereto moves upward and downward along a guide post 27a by the activation of an air cylinder 34.

The tire can be mounted on the wheel, and the tire can be demounted from the wheel using the tire mounting and demounting apparatus configured as described above.

### (Tire Mounting Process)

### (1) Fixing the wheel to the turntable

By activating the air cylinder 7, the respective holding claws 6, 6 ... moves along a radial groove provided on the turntable 2, and the wheel 20 placed on the turntable 2 is fixed.

### (2) Arranging the tire 21 on the wheel 20

### (3) Fitting a lower bead portion of the tire 21 thereto

By causing a lower tire bead portion to be caught by the tire claw 1 and, in this state, turning the wheel 20 and the tire 21 together with the turntable 2, the lower tire bead portion is fitted to the wheel 20. In this case, since the upper bead portion is in a free state, even the low-profile tire or the run flat tire can be fitted relatively easily.

### (4) Fitting the upper tire bead portion

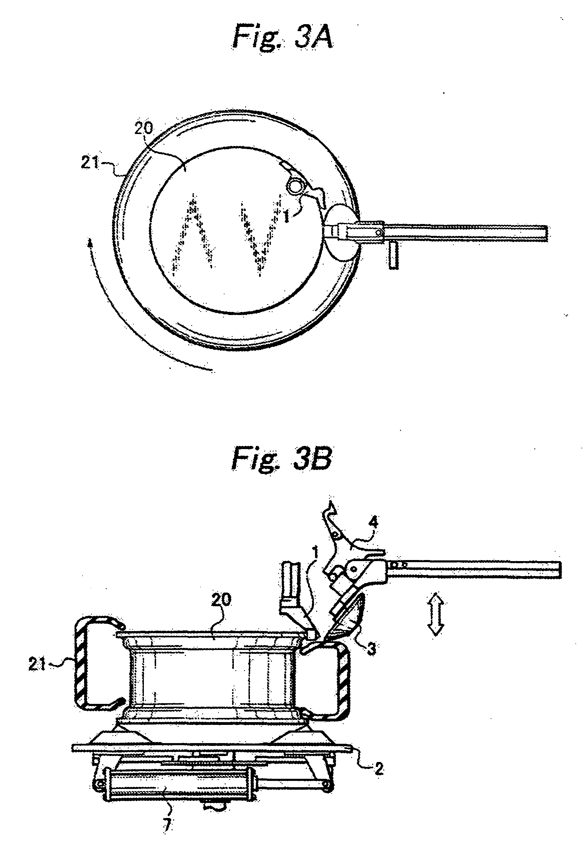

In this case as well, by causing the upper bead portion to be caught by the tire claw 1 and, in this state, turning the wheel 20 and the tire 21 together with the turntable 2, the upper tire bead portion is fitted to the wheel 20. The portion near the upper bead portion is pressed by the bead press roller 3 (see Figs. 3A and 3B). The holding panel 5 is placed on the upper side surface of the tire as occasion demands and rotates the wheel 20 and the tire 21. By placing the holding panel 5 thereon, the upper tire bead portion which is once fitted is prevented from being detached from the wheel 20 and the entire circumference can be fitted by turning the tire 21 by 360 degrees. The holding panel 5 can be turned with the tire 21 in a state of being placed on the upper side surface of the tire 21 by the connection of three links 17, 18, and 19 connected via joints from a base portion 15 which moves upward and downward along a guide post 16.

The invention is a method of enabling detachment of the upper bead portion which is not easy specifically in the case of the low-profile tire or the run flat tire without the necessity of a specific skill, a detaching apparatus, and a bead detaching arm used in the same method and apparatus. The respective processes will be described in detail below. As a matter of course, the normal tire can be demounted from the wheel using the tire claw 1 without using the bead detaching arm.

### (Detaching Process of Upper Tire Bead Portion)

### (1) Fixation of Wheel

The wheel 20 mounted the tire 21 is placed on the turntable 2 in the horizontal direction and the same is fixed with the plurality of holding claws 6, 6 ....

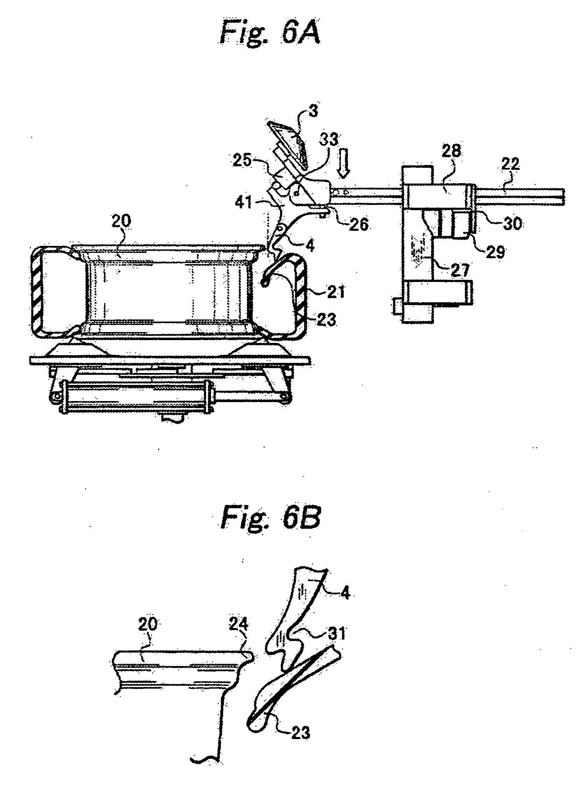

### (2) Pressing the portion near the upper bead portion of the tire 21 with the distal end of the bead detaching arm 4 (see Fig. 6Aand Fig. 6B).

As shown in Fig. 6B in an enlarged scale, the distal end of the bead detaching arm 4 presses and deforms the portion near the upper bead portion by arranging the bead detaching arm 4 at a position close to the end edge 24 of the wheel 20 and moving the base portion 27 having the bearing 28 attached thereto downward along the guide post 27a. However, even though the bead detaching arm 4 is moved downward at this position and deforms the upper side portion of the tire by pressing the portion near the upper bead portion, the upper bead portion 23 cannot engage the bead detaching arm 4.

### (3) Rotation of Bead Detaching Arm

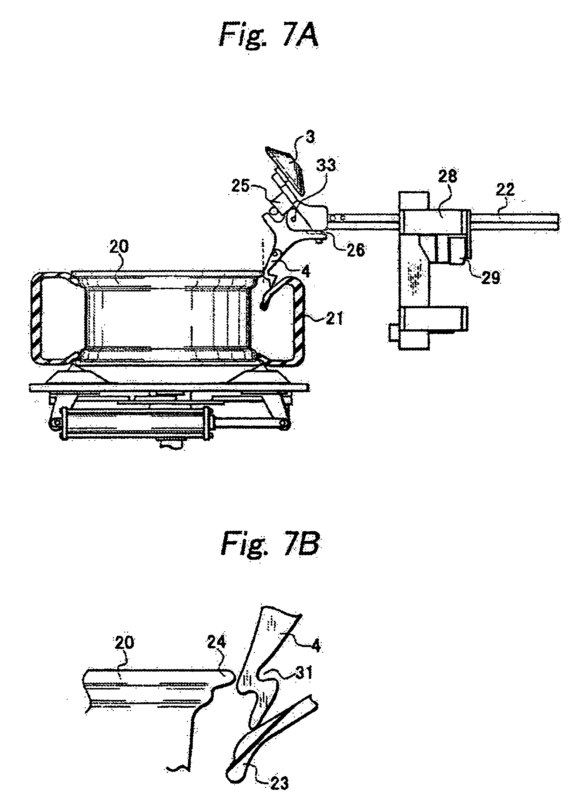

When the air cylinder 25 is turned OFF at timing when the bead detaching arm 4 is moved downward to some extent, the bead detaching arm 4 is rotated and inclined by the resiliency of the spring 26 and the distal end thereof is brought closer to the wheel 20 (see Figs. 7A and 7B). If the orientation of the bead detaching arm 4 is inclined to a predetermined angle from the initial state, the distal end of the bead detaching arm 4 comes into abutment with the wheel end edge 24. Therefore, the bead detaching arm 4 is rotated when the distal end portion is moved to a position downward of the wheel end edge 24 as in the same dmwings to bring the distal end closer the end edge of the upper bead portion 23.

### (4) Engaging of the upper bead portion with the outer groove of the bead detaching arm

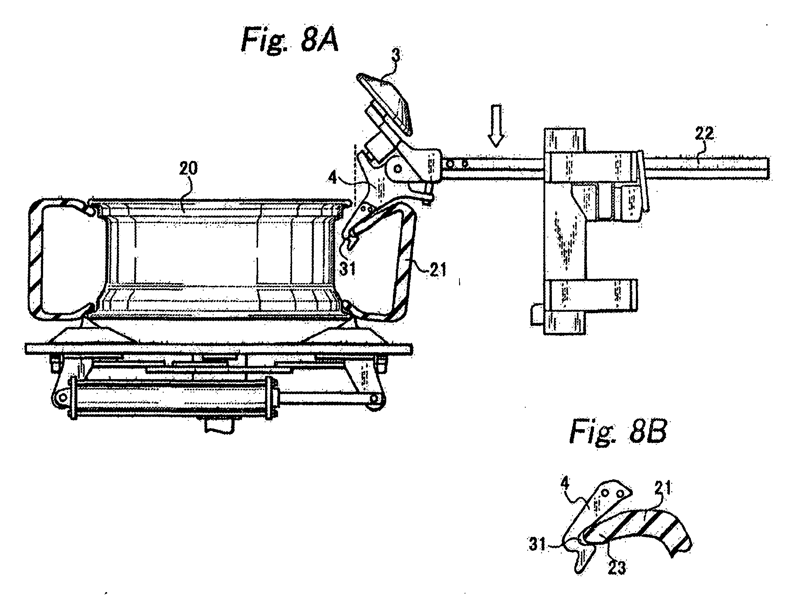

When the bead detaching arm 4 is pressed and moved further downward in the state in which the bead detaching arm 4 is rotated and inclined, the upper bead portion 23 engages with the outer groove 31 as shown in Figs. 8A and 8B.

### (5) Detachment of the Upper Bead Portion

When the upper bead portion 23 engages with the outer groove 31 of the bead detaching arm 4, the bead detaching arm 4 is moved upward. Then, the upper bead portion 23 is detached from the end edge 24 of the wheel 20. At this time, since a spring force is applied to the bead detaching arm 4 in a state in which the air cylinder 25 is in an OFF state, the distal end portion moves upward with the upward movement of the bead detaching arm 4 while coming into contact with the outer periphery of the wheel 20.

### (6) Engaging of the Inner Groove of the Bead Detaching Arm with the Wheel End Edge 24

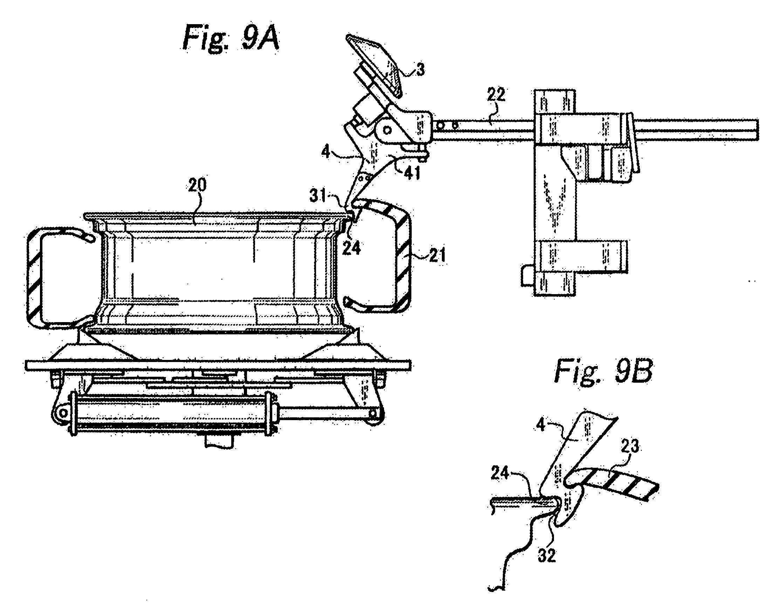

When the bead detaching arm 4 is moved upward in a state of being urged toward the wheel 20, the inner groove 32 of the bead detaching arm 4 engages with the wheel end edge 24 as shown in Figs. 9A and 9B. The distal end portion of the bead detaching arm 4 is positioned by the engagement of the inner groove 32 with the wheel end edge 24.

### (7) Deaeration of Air Cylinder

In a state in which the inner groove 32 of the bead detaching arm 4 engages with the wheel end edge 24 while the upper tire bead portion 23 being engaged with the outer groove 31, the force pressing downward by the upper tire bead portion 23 and the force moving upward by the air cylinder 34 are well balanced. In other words, in the invention, the air pressure in the air cylinder 34 is released in the course of detachment of the upper bead portion 23 from a wheel rim portion.

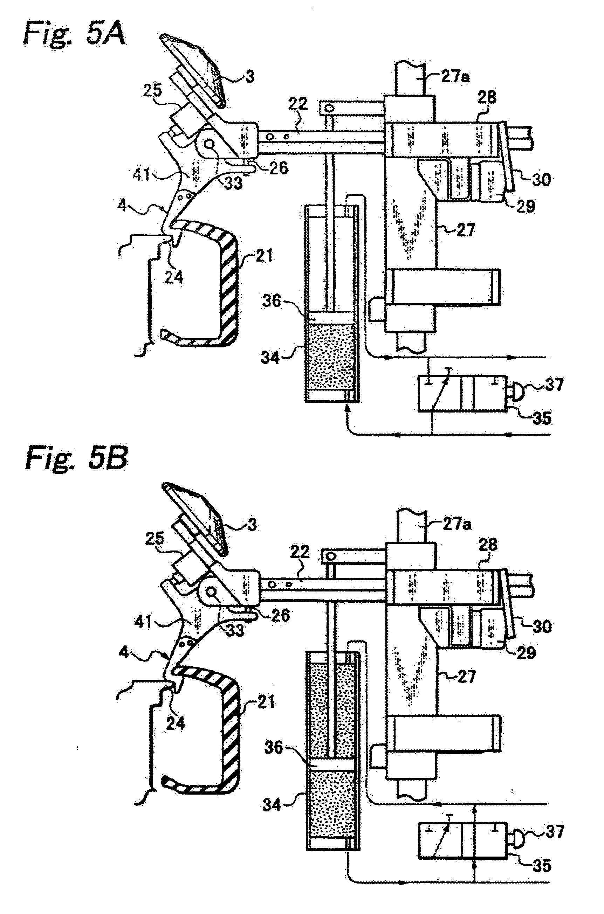

Fig. 5A shows a state in which the air pressure is applied to a piston 36 of the air cylinder 34 to move the same upward. In this state, when the tire 21 is turned together with the wheel 20, the upper bead portion 23 is detached in sequence from the wheel 20. Consequently, the area of the upper bead portion 23 fitted to the wheel 20 is reduced, and the force to press the bead detaching arm 4 downward is gradually weakened. Finally, the air compressed by the piston 36 of the air cylinder 34 is expanded, and the inner groove 32 of the bead detaching arm 4 is detached from the wheel end edge 24. In order to prevent this phenomenon, a button switch 37 of a switch valve 35 is pressed at timing when the bead detaching arm 4 is moved upward and the inner groove 32 engages the wheel end edge 24, and the air pressure in the air cylinder 34 is released (see Fig. 5B).

However, due to the engagement of the wheel end edge 24 with the inner groove 32, the bead detaching arm 4 does not move downward. In other words, the shape of the inner groove 32 is formed to allow the upward movement but prevent the downward movement.

### (8) Detachment of the upper bead portion

Since the position of the outer groove 31 is higher than the inner groove 32, in a state in which the inner groove 32 engages with the wheel end edge 24, the upper bead portion 23 engaging with the outer groove 31 is positioned at a level higher than the wheel end edge 24, and is separate from the wheel 20. Therefore, when the wheel 20 and the tire 21 rotate, the entire circumference of the upper bead portion 23 is detached from the wheel 20. Since the air pressure in the air cylinder 34 is released, the upper bead portion 23 is detached from the wheel 20 even though the tire 21 is turned. Therefore, even when the force to press the bead detaching arm 4 downward is reduced, the bead detaching arm 4 does not come apart from the wheel end edge 24. In other words, the upper bead portion can safely be detached.

### (9) Detachment of the Lower Bead Portion

The lower bead portion of the tire 21 whose upper bead portion 23 is detached from the wheel 20 can be detached from the wheel 20 easily by turning the tire 21 while pressing the bead up roller 9 against the lower surface of the tire 21. As a matter of course, in the invention, the detachment of the lower bead portion is exempt, and is not limited to the case where the bead up roller 9 is used.

In the embodiment mentioned above, the bead detaching arm 4 is rotated and the distal end thereof is brought near the wheel at timing when the upper tire bead portion is pressed and deformed by moving the bead detaching arm 4 downward to some extent. However, the distal end can be moved closer to the wheel 20 by sliding the angular shaft 22 at a position where the bead detaching arm 4 is moved downward to some extent without rotating the bead detaching arm 4. However, if the bead detaching arm 4 is fixed so as not to rotate at all, the wheel end edge 24 becomes obstacle when the bead detaching arm 4 is moved upward after having engaged the upper bead portion 23. Therefore, it is necessary to configure the bead detaching arm 4 to compress the spring 26 and rotate by being pushed backward when the distal end 42 comes into contact with the wheel end edge 24.

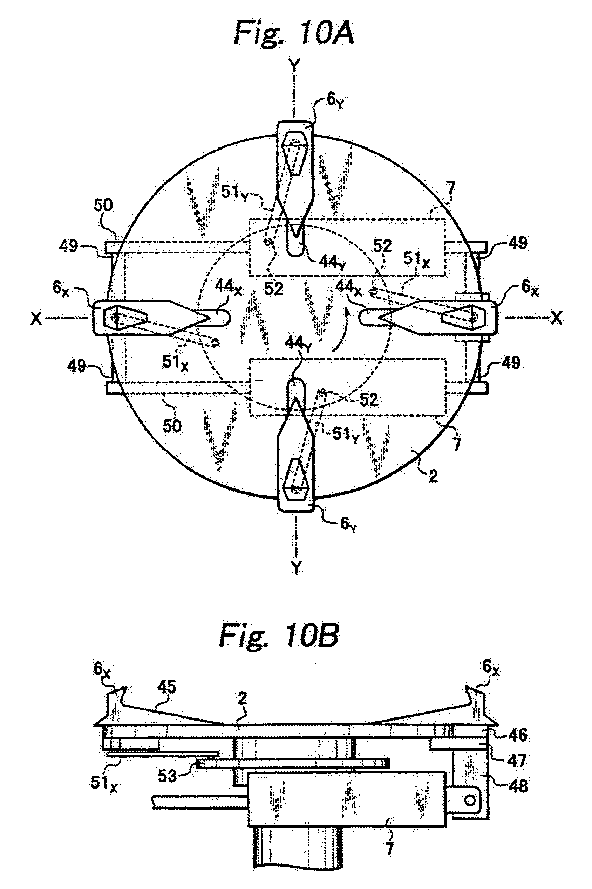

Figs. 10A, 10B show another state of the turntable 2 to which the wheel 20 is fixed. The turntable 2 shown in the same drawing has a disk shape instead of the square shape shown in Fig. 1. The turntable 2 is provided with four chuck claws 6x, 6x, 6y and 6y, and the chuck claws 6x, 6x, 6y and 6y can slide along radially extending guide grooves 44x, 44x, 44y and 44y.

The chuck claws 6x, 6x, 6y and 6y include inclined portions 45, 45, ... extending obliquely from the upper surface of the turntable 2, and the distal end thereof is formed into a substantially V-shape. Therefore, the chuck claws 6x, 6x, 6y and 6y can catch and clamp the wheel end edge of the wheel placed on the upper surface of the turntable 2 or of the wheel with a tire mounted thereon. Sliders 46, 46,... are provided on the lower side of the chuck claws 6x, 6x, 6y and 6y, and the sliders 46, 46, ... are loosely fitted into the guide grooves 44x, 44x, 44y and 44y formed on the turntable 2.

The slider 46 includes a lower panel 47 at the lower end thereof, and the turntable 2 is clamped between the chuck claw 6 and the lower panel 47. Since the slider 46 is fitted into the guide groove 44, the chuck claw 6 does not lift upward from the turntable 2, and is capable of sliding along the guide groove 44.

The lower panel 47 includes two brackets 48 and 48 extending downward therefrom, and rods 49 and 49 extending outward from the brackets 48 and 48, and the air cylinders 7 and 7 connected to the distal ends of the both rods 49 and 49. Distal ends of piston rods 50 and 50 of the air cylinders 7 and 7 are connected to the rods 49 and 49 extending outward from the brackets 48 and 48 on the side of the opposed chuck claws 6.

Links 51x and 51 x are connected to lower panels 47 and 47 of the both chuck claws 6x, 6x via shafts 52 and 52, and the links 51 x and 51x are connected to an outer periphery of a disk 53 via the shafts 52 and 52. In contrast, the chuck claws 6y, 6y are also attached on a Y-Y axis which is vertical to the chuck claws 6x, 6x arranged on a X-X axis so as to be fitted to the guide grooves 44y and 44y. Links 51y and 51y are connected to the lower panels 47 and 47 provided at lower ends of the sliders of the chuck claws 6y, 6y via the shafts 52 and 52, and distal ends of the links 51y and 51y are connected to the outer periphery of the disk 53 via the shafts 52 and 52.

When the air cylinders 7 and 7 are activated and the piston rods 50 and 50 are contracted (retracted), the chuck claws 6x, 6x located on the X-X direction are moved toward the center along the guide grooves 44x and 44x and, simultaneously, rotates the disk 53 counterclockwise via the links 51x and 51x. In contrast, the chuck claws 6y, 6y arranged on the Y-Y axis can move toward the center via the links 51y and 51y. The disk 53 is pivotally supported by a main shaft of the turntable 2, and hence the four chuck claws 6x, 6x, 6y and 6y are moved toward the center by the rotation of the disk 53 and the wheel 20 is fixed. The structure of the turntable 2 provided with the four chuck claws 6x, 6x, 6y and 6y is only an provisioning description, and is not limited to the configuration shown in Figs. 10A and 10B.

## Claims

1. A method of detaching an upper tire bead portion (23) by fixing a wheel (20) having a tire (21) mounted thereon on a turntable (2) and turning the tire (21) together with the wheel (20), the method comprising steps of:
providing an bead detaching arm (4) being movable upward and downward, the bead detaching arm (4) having an outer groove (31) formed at a distal end portion thereof for allowing engagement of an upper tire bead portion (23) therewith and an inner groove (32) formed at a position lower than the outer groove (31) and on the opposite side therefrom and configured to engage with a wheel end edge (24);
pressing the bead detaching arm (4) against a portion of the tire (21) near the upper tire bead portion (23) and deforming the same, and engaging the upper tire bead portion (23) with the outer groove (31);
moving the bead detaching arm (4) upward, causing the inner groove (32) to engage with the wheel end edge (24), and releasing air pressure of an air cylinder (34) for moving the bead detaching arm (4) upward and downward by switching a switch value (35); and
turning the tire (21) together with the wheel (20) in this state and detaching the upper tire bead portion (23), the method **characterized in that**
the bead detaching arm (4) is rotatably supported and is controlled in such a manner that the distal end thereof is rotated away from the wheel (20) by an action of an air cylinder (25) and is rotated toward the wheel (20) by a spring force when the air cylinder (25) is turned OFF.

2. The method of detaching the upper tire bead portion (23) according to Claim 1, further comprising: rotating the bead detaching arm (4) to bring a distal end thereof closer to the wheel (20) at a timing when the bead detaching arm (4) presses a portion near the upper tire bead portion (23) and the distal end portion thereof is moved downward to a level lower than the wheel end edge (24), and further pressing the bead detaching arm (4) and deforming the same to cause the upper tire bead portion (23) to engage with the outer groove (31).

3. An apparatus for detaching an upper tire bead portion (23) by fixing a wheel (20) having a tire (21) mounted thereon on a turntable (2) and turning the tire (21) together with the wheel (20), comprising:
an air cylinder (34) having a switch valve (35) for controlling the flow of air; and
an bead detaching arm (4) configured to be moved upward and downward by the air cylinder (34), the bead detaching arm (4) having an outer groove (31) formed at a distal end portion thereof for allowing engagement of an upper tire bead portion (23) therewith and an inner groove (32) formed at a position lower than the outer groove (31) and on the opposite side therefrom and configured to engage with a wheel end edge (24); whereby
air pressure of the air cylinder (34) is released in a state in which the upper tire bead portion (23) engages with the outer groove (31) of the bead detaching arm (4) and is moved upward, and the inner groove (32) is engaged with the wheel end edge (24), **characterized in that** the apparatus further comprises:
a tire claw (1) used for mounting and demounting a normal tire (21), the tire claw (1) being adjustable in vertical position and in radial position from the center of the turntable (2) so as to be capable of catching bead of the tires of various sizes, a holding panel (5) attached to a distal end of a plurality of joint links (17, 18, 19) for pressing the upper side surface of the tire (21), and a bead up roller (9) configured to move upward and downward so as to press the lower tire side surface.

4. The upper tire bead portion (23) detaching apparatus according to Claim 3, wherein the bead detaching arm (4) includes a bead press roller (3) attached to a distal end of an unrotatable sliding rod (22), and rotatably supported in pair with the bead detaching arm (4).

5. The upper tire bead portion (23) detaching apparatus according to Claim 3 or 4, wherein the bead detaching arm (4) is attached so as to be rotatable about a pivotal axis (33),
wherein an air cylinder (25) is mounted to be configured to rotate the distal end portion of the upper tire bead portion (23) away from the wheel end edge (24) when pressing and deforming the upper tire bead portion (23) for causing the upper tire bead portion (23) to engage with the outer groove (31), and
wherein a spring (26) is mounted to be on the opposite side from the air-cylinder (25) so as to be configured to urge the distal end portion of the bead detaching arm (4) toward the wheel end edge (24).

6. The upper tire bead portion (23) detaching apparatus according to Claim 3 or 4, wherein the turntable (2) includes chuck claws (6x, 6y) configured to catch the end edge (24) of an outer periphery of the wheel (20) by moving along guide grooves (44x, 44y) extending in a radial direction.

## Patentansprüche

1. Verfahren zum Lösen eines oberen Reifenwulstabschnitts (23) durch Fixieren eines Rads (20) mit einem darauf montierten Reifen (21) auf einem Drehtisch (2) und Drehen des Reifens (21) zusammen mit dem Rad (20), wobei das Verfahren die Schritte aufweist:
Bereitstellen eines aufwärts- und abwärts beweglichen Wulstablösarms (4), wobei der Wulstablösarm (4) eine an einem distalen Endabschnitt davon ausgebildete äußere Nut (31) aufweist, mit der der obere Reifenwulstabschnitt (23) in Eingriff gebracht werden kann, und eine innere Nut (32), die an einer Position unterhalb der äußeren Nut (31) und auf der gegenüberliegenden Seite davon ausgebildet und dafür konfiguriert ist, mit einem Radrand (24) in Eingriff zu kommen;
Drücken des Wulstablösarms (4) gegen einen Abschnitt des Reifens (21) in der Nähe des oberen Reifenwulstabschnitts (23) und Verformen dieses Abschnitts und Ineingriffbringen des oberen Reifenwulstabschnitts (23) mit der äußeren Nut (31);
Bewegen des Wulstablösarms (4) nach oben, wodurch veranlasst wird, dass die innere Nut (32) mit dem Radrand (24) in Eingriff kommt, und Freigeben von Luftdruck eines Luftzylinders (34) zum Bewegen des Wulstablösarms (4) nach oben und unten durch Schalten eines Schaltventils (35); und
Drehen des Reifens (21) zusammen mit dem Rad (20) in diesem Zustand und Lösen des oberen Reifenwulstabschnitts (23),
wobei das Verfahren **dadurch gekennzeichnet ist, dass**
der Wulstablösarm (4) drehbar gehalten und derart gesteuert wird, dass sein distales Ende durch die Wirkung eines Luftzylinders (25) von dem Rad (20) weg gedreht wird und durch eine Federkraft zum Rad (20) hin gedreht wird, wenn der Luftzylinder (25) ausgeschaltet ist.

2. Verfahren zum Lösen eines oberen Reifenwulstabschnitts (23) nach Anspruch 1, ferner mit den Schritten:
Drehen des Wulstablösarms (4), um ein distales Ende davon näher zum Rad (20) zu bringen, während der Wulstablösarm (4) gegen einen Abschnitt in der Nähe des oberen Reifenwulstabschnitts (23) drückt und der distale Endabschnitt davon nach unten auf ein Level bewegt wird, das tiefer ist als der Radendrand (24), und Weiterdrücken des Wulstablösarms (4) und Verformen desgleichen, um zu veranlassen, dass der obere Reifenwulstabschnitt (23) mit der äußeren Nut (31) in Eingriff kommt.

3. Vorrichtung zum Lösen eines oberen Reifenwulstabschnitts (23) durch Fixieren eines Rads (20) mit einem darauf montierten Reifen (21) auf einem Drehtisch (2) und Drehen des Reifens (21) zusammen mit dem Rad(20), mit:
einem Luftzylinder (34) mit einem Schaltventil (35) zum Steuern eines Luftstroms; und
einem Wulstablösarm (4), der dafür konfiguriert ist, durch den Luftzylinder (34) aufwärts- und abwärts bewegt zu werden, wobei der Wulstablösarm (4) eine an einem distalen Endabschnitt davon ausgebildete äußere Nut (31) aufweist, mit der der obere Reifenwulstabschnitt (23) in Eingriff gebracht werden kann, und eine innere Nut (32), die an einer Position unterhalb der äußeren Nut (31) und auf der gegenüberliegenden Seite davon ausgebildet und dafür konfiguriert ist, mit einem Radendrand (24) in Eingriff zu kommen, wobei Luftdruck des Luftzylinders (34) in einem Zustand freigegeben wird, in dem der obere Reifenwulstabschnitt (23) mit der äußeren Nut (31) des Wulstablösarms (4) in Eingriff steht und nach oben bewegt wird und die innere Nut (32) mit dem Radendrand (24) in Eingriff steht;
**dadurch gekennzeichnet, dass** die Vorrichtung ferner aufweist:
eine Reifenklaue (1), die zum Montieren und Demontieren eines normalen Reifens (21) verwendet wird, wobei die Reifenklaue (1) in der vertikalen Position und in der radialen Position bezüglich der Mitte des Drehtischs (2) verstellbar ist, so dass sie in der Lage ist, mit dem Wulst von Reifen verschiedener Größe in Eingriff zu kommen;
eine an einem distalen Ende mehrerer Verbindungselemente (17, 18, 19) befestigte Halteplatte (5), die dazu vorgesehen ist, die obere Seitenfläche des Reifens (21) zu drücken; und
eine Wulstanheberolle (9) die dafür konfiguriert ist, aufwärts- und abwärts bewegt zu werden, um gegen die untere Reifenseitenfläche zu drücken.

4. Vorrichtung zum Lösen eines oberen Reifenwulstabschnitts (23) nach Anspruch 3, wobei der Wulstablösarm (4) eine Wulstdrückrolle (3) aufweist, die am distalen Ende einer nicht drehbaren verschiebbaren Stange (22) befestigt und in einem Paar mit dem Wulstabdrückarm (4) drehbar gehalten wird.

5. Vorrichtung zum Lösen eines oberen Reifenwulstabschnitts (23) nach Anspruch 3 oder 4, wobei der Wulstlösdrückarm (4) derart befestigt ist, dass er um eine Drehachse (33) drehbar ist,
wobei ein Luftzylinder (25) derart montiert ist, dass er dafür konfiguriert ist, den distalen Endabschnitt des oberen Reifenwulstabschnitts (23) vom Radendrand (24) weg zu drehen, wenn der obere Reifenwulstabschnitt (23) gedrückt und verformt wird, um zu veranlassen, dass der obere Reifenwulstabschnitt (23) mit der äußeren Nut (31) in Eingriff kommt, und
wobei eine Feder (26) auf der dem Luftzylinder (25) gegenüberliegenden Seite derart montiert ist, dass sie dafür konfiguriert ist, den distalen Endabschnitt des Wulstablösarms (4) zum Radendrand (24) hin zu zwingen.

6. Vorrichtung zum Lösen eines oberen Reifenwulstabschnitts (23) nach Anspruch 3 oder 4, wobei der Drehtisch (2) Spannklauen (6x, 6y) aufweist, die dafür konfiguriert sind, durch Bewegen entlang sich in einer radialen Richtung erstreckender Führungsnuten (44x, 44y) mit dem Endrand (24) eines Außenumfangs des Rads (20) in Eingriff zu kommen.

## Revendications

1. Procédé pour détacher une partie de talon de pneu supérieure (23) en fixant une roue (20) ayant un pneu (21) monté-sur cette dernière sur une plaque tournante (2) et faire tourner le pneu (21) conjointement avec la roue (20), le procédé comprenant les étapes consistant à :
prévoir un bras de détachement de talon (4) qui est mobile vers le haut et vers le bas, le bras de détachement de talon (4) ayant une rainure externe (31) formée au niveau de sa partie d'extrémité distale pour permettre la mise en prise d'une partie de talon de pneu supérieure (23) avec cette dernière et une rainure interne (32) formée dans une position plus basse que la rainure externe (31) et sur son côté opposé et configurée pour se mettre en prise avec un bord d'extrémité de roue (24) ;
comprimer le bras de détachement de talon (4) contre une partie du pneu (21) à proximité de la partie de talon de pneu supérieure (23) et déformer ce dernier, et mettre en prise la partie de talon de pneu supérieure (23) avec la rainure externe (31) ;
déplacer le bras de détachement de talon (4) vers le haut, amener la rainure interne (32) à se mettre en prise avec le bord d'extrémité de roue (24), et libérer la pression d'air d'un vérin pneumatique (34) pour déplacer le bras de détachement de talon (4) vers le haut et vers le bas en commutant un robinet à trois voies (35) ; et
faire tourner le pneu (21) conjointement avec la roue (20) dans cet état et détacher la partie de talon de pneu supérieure (23), le procédé étant **caractérisé en ce que** :
le bras de détachement de talon (4) est supporté en rotation et est contrôlé de sorte que son extrémité distale est entraînée en rotation à distance de la roue (20) par une action d'un vérin pneumatique (25) et est entraînée en rotation vers la roue (20) par une force de rappel lorsque le vérin pneumatique (25) est arrêté.

2. Procédé pour détacher une partie de talon de pneu supérieure (23) selon la revendication 1, comprenant en outre les étapes consistant à : faire tourner la partie de détachement de talon (4) pour amener son extrémité distale plus à proximité de la roue (20) à un moment où le bras de détachement de talon (4) comprime une partie à proximité de la partie de talon de pneu supérieure (23) et sa partie d'extrémité distale est déplacée vers le bas à un niveau inférieur au bord d'extrémité de roue (24), et comprimer en outre le bras de détachement de talon (4) et déformer ce dernier pour amener la partie de talon de pneu supérieure (23) à se mettre en prise avec la rainure externe (31).

3. Appareil pour détacher une partie de talon de pneu supérieure (23) en fixant une roue (20) ayant un pneu (21) monté sur ce dernier sur une plaque tournante (2) et faire tourner le pneu (21) conjointement avec la roue (20), comprenant :
un vérin pneumatique (34) ayant un robinet à trois voies (35) pour contrôler le débit d'air ; et
un bras de détachement de talon (4) configuré pour être déplacé vers le haut et vers le bas par le vérin pneumatique (34), le bras de détachement de talon (4) ayant une rainure externe (31) formée au niveau de sa partie d'extrémité distale pour permettre la mise en prise d'une partie de talon de pneu supérieure (23) avec cette dernière, et une rainure interne (32) formée dans une position inférieure à la rainure externe (31) et sur son côté opposé et configurée pour se mettre en prise avec un bord d'extrémité de roue (24) ; moyennant quoi :
la pression d'air du vérin pneumatique (34) est libérée dans un état dans lequel la partie de talon de pneu supérieure (23) se met en prise avec la rainure externe (31) du bras de détachement de talon (4) et est déplacée vers le haut, et la rainure interne (32) est mise en prise avec le bord d'extrémité de roue (24), **caractérisé en ce que** l'appareil comprend en outre :
une griffe de pneu (1) utilisée pour monter et démonter un pneu normal (21), la griffe de pneu (1) étant ajustable en position verticale et en position radiale à partir du centre de la plaque tournante (2) afin d'être capable de saisir le talon des pneus de différentes tailles, un panneau de support (5) fixé sur une extrémité distale d'une pluralité de liaisons de joint (17, 18, 19) pour comprimer la surface latérale supérieure du pneu (21), et un rouleau de talon (9) configuré pour se déplacer vers le haut et vers le bas afin de comprimer la surface latérale de pneu inférieure.

4. Appareil de détachement de partie de talon de pneu supérieure (23) selon la revendication 3, dans lequel le bras de détachement de talon (4) comprend un rouleau de pression de talon (3) fixé sur une extrémité distale d'une tige coulissante non rotative (22), et supporté en rotation en paire avec le bras de détachement de talon (4).

5. Appareil de détachement de partie de talon de pneu supérieure (23) selon la revendication 3 ou 4, dans lequel le bras de détachement de talon (4) est fixé afin d'être entraîné en rotation autour d'un axe de pivot (33),
dans lequel un vérin pneumatique (25) est monté pour être configuré pour faire tourner la partie d'extrémité distale de la partie de talon de pneu supérieure (23) à distance du bord d'extrémité de roue (24) lors de la pression et de la déformation de la partie de talon de pneu supérieure (23) pour amener la partie de talon de pneu supérieure (23) à se mettre en prise avec la rainure externe (31), et
dans lequel un ressort (26) est monté pour être sur le côté opposé du vérin pneumatique (25) afin d'être configuré pour pousser la partie d'extrémité distale du bras de détachement de talon (4) vers le bord d'extrémité de roue (24).

6. Appareil de détachement de partie de talon de pneu supérieure (23) selon la revendication 3 ou 4, dans lequel la plaque-tournante (2) comprend des griffes de serrage (6x, 6y) configurées pour saisir le bord d'extrémité (24) d'une périphérie externe de la roue (20) en se déplaçant le long des rainures de guidage (44x, 44y) s'étendant dans une direction radiale.
